# EUROPÄISCHE PATENTSCHRIFT

(11) **EP 1 676 615 B1**
(45) Veröffentlichungstag und Bekanntmachung des Hinweises auf die Patenterteilung: **11.03.2009**
(21) Anmeldenummer: 05090360.8
(22) Anmeldetag: 28.12.2005
(51) Int. Cl.: B01D 15/08, B01J 20/26, C08F 212/36, A61M 1/36

(54) **Festphasensorbens**
Solid phase sorbent
Phase sorbente solide

(30) Priorität: 28.12.2004 DE 102004063633
(43) Veröffentlichungstag der Anmeldung: 05.07.2006
(73) Patentinhaber: Polymerics GmbH, 12681 Berlin (DE)
(72) Erfinder: Leistner, Aniela, 15366 Birkenstein (DE); Leistner, André, 15366 Birkenstein (DE)
(74) Vertreter: Neumann, Günter

(56) Entgegenhaltungen:
- WO-A-20/04060554
- DE-A1- 19 922 268
- US-A- 4 093 570
- US-A- 4 202 775
- US-B1- 6 177 513

## Beschreibung

Die Erfindung betrifft ein Festphasenextraktionssorbens, bestehend aus einem perlförmigen, hochporösen Polymeren.

Die Festphasenextraktion (solid phase extraction, SPE) ist eine Probenvorbereitungsmethode, die sich in den letzten 15 Jahren rasant entwickelt hat und sich als ein Standardverfahren in der pharmazeutischen und medizinischen Forschung, in der Lebensmittelchemie und der Umweltanalytik etabliert hat. Ihren Aufstieg verdankt die SPE ihrer Vielseitigkeit, Wirtschaftlichkeit und leichten Automatisierbarkeit. Sie wird zur Aufreinigung, Anreicherung, zum Wechsel des Lösungsmittels (der Analyt wird z.B. aus wässriger Lösung in ein organisches Lösungsmittel überführt), zum Entsalzen, Derivatisieren (der Analyt wird auf dem Sorbens zurückgehalten, derivatisiert und danach eluiert) und zur Vorfraktionierung der Probe in z.B. unterschiedliche Verbindungsklassen eingesetzt.

Mit dem Aufkommen neuer kombinatorischer Verfahren und schneller Analysetechniken, wie z.B. LC-MS (liquid chromtography/mass spectroscopy), hat sich das Entwicklungstempo neuer Arzneistoffe wesentlich erhöht. Durch die routinemäßige Erzeugung tausender Proben ist auch der Bedarf an Methoden sprunghaft angestiegen, die hohe Durchsätze bei der automatischen Probenvorbereitung erlauben und dadurch Analytik und Wirkstoffscreening mit gereinigten Proben versorgen. Auf diese Herausforderung bietet die Festphasenextraktion mit Phasen im 96- und 384-Well-Plate-Format eine leistungsfähige Antwort.

In der modernen Spurenanalytik ist die Probenvorbereitung für die Qualität des Messergebnisses oft wichtiger als die eigentliche instrumentelle Analytik. Dies trifft besonders bei der Bestimmung von Spurenmengen in komplex zusammengesetzten Proben, etwa bei Körperflüssigkeiten, Geweben, Lebensmitteln, Naturstoffextrakten usw. zu. Hierzu stellt die SPE eine zeitsparende und reproduzierbare Alternative zu der sonst üblichen Flüssig-Flüssig-Extraktion dar.

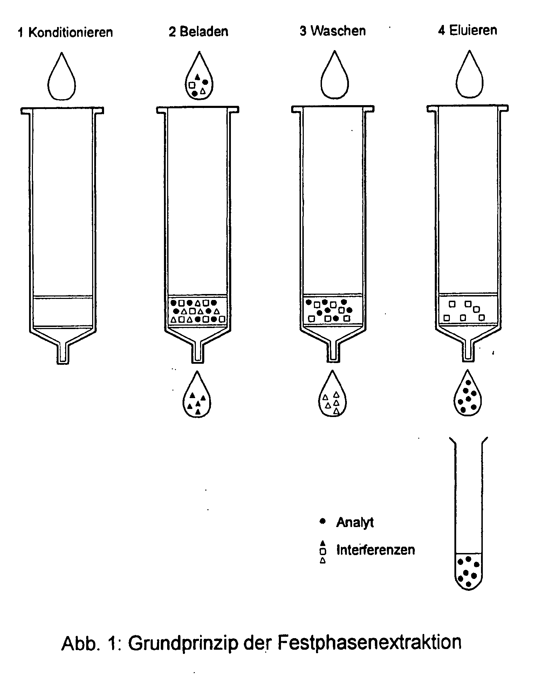

Die Festphasenextraktion ist eine sehr leicht anzuwendende Technik, bei der einfach gebaute Einwegsäulen verschiedener Dimension oder Hochdurchsatz-Extraktionsplatten im 96- oder 384-Well-Plate-Format verwendet werden [Oasis Sample Extraction Products, Firmenschrift Waters Inc., 2003, P/N 720000606EN]. Das Grundprinzip der SPE ist in Abbildung 1 dargestellt. Als erster Schritt erfolgt gewöhnlich eine Vorkonditionierung des Sorbens. Dann wird die meist wässrige Probelösung in die Kartusche gegeben (Beladung). Während die flüssige Probe das Sorbensbett durchfließt, werden die Probenbestandteile am Sorbens zurückgehalten und damit extrahiert. Interferenzen (Begleitstoffe) können anschließend selektiv durch die Wahl einer passenden Waschlösung entfernt werden. Schließlich wird die zu isolierende Verbindung in einem geeigneten Lösungsmittel in einer sauberen Fraktion selektiv eluiert.

Alternativ zu der hier beschriebenen Vorgehensweise kann eine Extraktionssäule auch dazu benutzt werden, um Verunreinigungen in einer Probe selektiv zurückzuhalten, während der Analyt die Säule unreteniert durchläuft. [Mitra, S. (editor), Sample preparation techniques in analytical chemistry, John Wiley & Sons, 2003, p. 78-138].

In vielen Fällen wird die Festphasenextraktion zur Aufkonzentrierung des Analyten eingesetzt. Dazu wird ein großes Volumen an wässriger Probelösung mit geringer Analytenkonzentration durch das Sorbensbett filtriert und anschließend mit einer kleinen Menge organischen Lösungsmittels (meist Methanol) eluiert. Im Idealfall befindet sich dann die gesamte Analytmenge der ursprünglichen wässrigen Probelösung im höher konzentrierten methanolischen Eluat.

Die SPE-Säulen sind meistens mit einem Sorbens einer mittleren Partikelgröße von 30 µm und 60 µm gepackt. Die meisten Lösungsmittel fließen allein infolge der Schwerkraft durch die Säule. Um allerdings viskosere Lösungen und Proben durch die Säule zu leiten, wird eine von den folgenden Methoden angewendet
- Vakuum am Säulenausgang
- Zentrifugieren der Probe durch die Säule
- Überdruck am Säuleneingang
   Diese Methoden empfehlen sich auch, wenn die Partikelgröße der Sorbentien kleiner ist als 50 µm.
   Die am häufigsten angewendete Technik ist die Nutzung einer Vakuum-Arbeitsstation. Ein positiver Druck wird nur beim Aufgeben einzelner Lösungen oder bei vollautomatisierten SPE-Systemen verwendet. Für die manuelle Aufgabe der Probe mit Hilfe einer Injektionsspritze ist ein Säulenadapter notwendig.
   Die am häufigsten verwendeten Sorbentien in der Festphasenextraktion basieren auf den sogenannten Silicagel-Reversephasen (RP-Phasen), die durch Modifizierung der polaren Silicageloberfläche mit aliphatischen, cycloaliphatischen bzw. aromatischen Kohlenwasserstoffen hergestellt werden und in den Patentschriften IE 0 059 565 B, EP 0 234 129 B1 und US 4,680, 121 beschrieben sind.
   Diese Sorbentien haben eine Reihe von Nachteilen. Sie sind oberhalb von pH = 10 und unterhalb von pH = 2 nicht stabil. Sie müssen während des gesamten Prozesses feucht bleiben. Bei Kontakt mit rein wässrigen Lösungen zeigen sie große Neigung zum Kollabieren. Sorbentien, die trockengelaufen oder kollabiert sind, zeigen eine schlechte Retention der Analyten und auf Grund dessen schlechte Wiederfindungsraten.
   Die Bedingung, dass das Sorbens während des Extraktionsprozesses angefeuchtet bleiben muss, kompliziert den Ablauf der Festphasenextraktion und verlängert die Analysenzeiten, weil SPE-Automaten mit zusätzlichen Sensoren und Schutzvorrichtungen zum Verhindern des Austrocknens des Sorbens ausgestattet werden müssen.
   Neben Silicagelmaterialien werden auch Styren-Divinylbenzen-Copolymere als polymere Sorbentien für die SPE beschrieben und in der Praxis eingesetzt (US 4,167,554, US 4,495,250, US 5,773,384). Diese polymeren Sorbentien haben stark hydrophobe Oberflächeneigenschaften und zeichnen sich durch eine hohe pH-Beständigkeit aus. Darüber hinaus dürfen sie ähnlich wie die Silica-RP-Phasen während des Extraktionsprozesses nicht Trockenlaufen. Wird dies nicht beachtet, erhält man mit den hydrophoben Styren-Divinylbenzen-Copolymeren bei einigen Stoffklassen schlechte Wiederfindungsraten.
   Einen weiteren Fortschritt auf dem Gebiet der polymeren Materialien für die SPE stellte 1996 das US 5,882,521 dar, in der wasserbenetzbare polymere Sorbentien beansprucht und 1997 in den Markt eingeführt wurden. Beschrieben wird ein makroporöses Copolymer, das aus zwei monomeren Komponenten, dem lipophilen Divinylbenzol und dem hydrophilen N-Vinylpyrrolidon, aufgebaut ist, wobei die beiden Monomere in einer hydrophilen-lipophilen Balance (HLB) vorliegen.
   Infolge der Wasserbenetzbarkeit behält dieses Copolymer seine Kapazität zur starken Retention eines breiten Spektrums verschiedener Analyten mit guten Wiederfindungsraten bei, selbst wenn das Trägermaterial Trockenlaufen sollte. In dem trockengelaufenen Zustand reteniert das Copolymer polare Analyten wie Acetaminophen, Ranitidin oder Procainamid deutlich besser (Wiederfindungsraten über 85%) als die hydrophoben Styren-Divinylbenzen-Copolymere (Wiederfindungsraten 13% bis 37%) und ebenfalls deutlich besser als die klassischen Silicagel-basierten C18-Materialien.
   Probleme können allerdings bei N-Vinylpyrrolidon-Divinylbenzen-Copolymeren bei der Verwendung von stark basischen Medien als Lösungs-, Wasch- oder Elutionssystem auftreten. Es ist bekannt, dass Poly-N-Vinylpyrrolidon in Gegenwart von Basen zu Poly-N-Vinyl-aminobuttersäure entsprechend der folgenden Gleichung hydrolysiert: 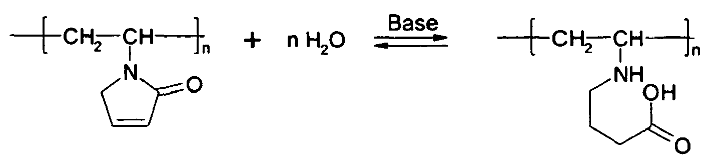 [Pielichowski J. J., Puszynski A. A., Technologia Tworzyw Sztucznych, Wydawnictwo WNT, Warszawa , 1994].
   Diese Reaktion gefährdet die Stabilität des Sorbens im basischen Bereich. Darüber hinaus bereitet die Synthese der N-Vinylpyrrolidon-Divinylbenzen-Copolymeren ein weiteres Problem, da sich N-Vinylpyrrolidon im Tierversuch als eindeutig krebserregend erwiesen hat (Römpp Chemie-Lexikon, Thieme-Verlag, Stuttgart, New York, 1995).
   Aufgabe der Erfindung ist es daher, ein alternatives, hydrophob-hydrophiles polymeres Festphasenextraktionssorbens bereitzustellen, welches umweltfreundlich herstellbar ist, hohe Stabilität im basischen und sauren Bereich besitzt und als universelles SPE-Material in einem breiten Umfang in der Hochdurchsatztechnik (high throughput) einsetzbar ist.
   Erfindungsgemäß wird die Aufgabe durch ein Sorbens bestehend aus einem perlförmigen, hochporösen Polymeren, das durch Suspensionspolymerisation aus mindestens einem hydrophilen Monomeren und mindestens einem hydrophoben Monomeren hergestellt wird, wobei
- als hydrophiles Monomer ein imidazolhaltiges Monomer,
- als hydrophobes Monomer ein Divinylbenzen- und Ethylvinylbenzen-Monomergemisch eingesetzt wird,
- das Polymere einen mittleren Porendurchmesser von 50 Å bis 100 Å und einem Porenvolumen von 1 ml/g bis 2 ml/g aufweist und
- eine Porengrößenverteilung, bezogen auf das Porenvolumen, von 15% bis 25% Mikroporen, 50% bis 80% Mesoporen und 5% bis 15% Makroporen besitzt.

Hydrophile, imidazolhaltige Monomere im Sinne der Erfindung sind 1-Vinylimidazol, 4-Vinylimidazol, 1-Vinyl-2-Methylimidazol und 1-Vinyl-2-Ethylimidazol, die durch radikalische Co- bzw. Terpolymerisation in das Polymernetzwerk eingebaut werden.

Hydrophobe Monomere im Sinne der Erfindung sind vorzugsweise Monomergemische isomerer Divinylbenzene und isomerer Ethylvinylbenzene, die durch radikalische Co- bzw. Terpolymerisation in das Polymernetzwerk eingebaut werden, wobei der Anteil an Divinylbenzen zwischen 50 Ma% und 85 Ma% und der Anteil an Ethylvinylbenzen zwischen 5 Ma% und 40 Ma% variieren kann.

Es können, weitere funktionalisierte Bausteine, wie Acrylsäure, Methacrylsäure und/oder deren Alkylester und/oder deren Alkylamide mit einem Anteil an Acrylsäure, Methacrylsäure und/oder deren Alkylester und/oder deren Alkylamide von 0 Ma% bis 20 Ma% durch radikalische Co- bzw. Terpolymerisation in das Netzwerk eingebaut werden. Geeignete funktionalisierte Bausteine, die in den erfindungsgemäßen Perlpolymerisaten enthalten sein können, sind beispielsweise Methyl-, Ethyl- und Butylacrylat, 2-Hydroxyethylmethacrylat, 2-Hydroxypropylmethacrylat, N,N-Dimethylaminopropylmethacrylat, N,N-Dimethylaminoethylmethacrylat, Acrylsäure-(3-sulfopropylester)-kaliumsalz, Acrylamid, Methacrylamid, Isopropylacrylamid, Triethylenglycoldimethacrylat und Diethylenglycoldimethacrylat.

Als besonders vorteilhafte SPE-Materialien für die Festphasenextraktion haben sich verschiedene Vinylimidazol-Co- bzw. Terpolymere mit 6 Ma% bis 12 Ma% einpolymerisiertem Vinylimidazol erwiesen.

Es ist ein besonderer Vorzug der Erfindung, dass es sich um maßgeschneiderte, hochporöse, hydrophob-hydrophile Perlpolymerisate mit einem mittleren Porendurchmesser von 50 Å bis 100 Å und einer bestimmten Porengrößenverteilung handelt. Überraschenderweise wurde festgestellt, dass die erfindungsgemäßen Perlpolymerisate für eine sehr breite Palette von Substanzen in der Anreicherungs- und auch Desorptionstechnik einsetzbar sind und sich der geringe mittlere Porendurchmesser von 50 Å bis 100 Å als besonders effektiv erwiesen hat. Neben einer bestimmten Monomerzusammensetzung müssen die Perlpolymerisate ein bestimmtes Porenvolumen und eine bestimmte Porengrößenverteilung aufweisen, damit sie in den modernen Verfahren der Festphasenextraktion ihre Aufgabe schnell und zuverlässig erfüllen können. Eigenschaften, die vor allem auch durch die Porengrößenverteilung bestimmt werden, sind die Adsorptionsgeschwindigkeit und Adsorptionskapazität. Der Porendurchmesserbereich beträgt 5 Å bis 1000 Å.

Nach IUPAC (International Union of Pure and Applied Chemistry) werden Mikroporen definiert als Poren mit einem Porendurchmesser unter 20 Å, Mesoporen sind Poren zwischen 20 Å und 500 Å und Makroporen sind Poren mit Durchmessern größer als 500 Å. Die Bestimmung der Porengrößenverteilung, des Gesamtporenvolumens und der spezifischen Oberfläche erfolgt mit Hilfe von Stickstoffadsorptions und -desorptionsmessungen bei der Siedetemperatur des Stickstoffs (77 K), die im Fall der erfindungsgemäßen Perlpolymerisate mit einem Gerät der Fima Micromeritics, Typ ASAP 2010, durchgeführt wurden. Die Messungen liefern für mikro- und mesoporöse Sorbentien charakteristische Adsorptions-Desorptions-Isothermen, die durch eine Hysterese gekennzeichnet sind.

Aus den Adsorptions-Desorptions-Isothermen wird die spezifische Oberfläche unter Zugrundelegung der BET-Mehrschichtadsorptionsisotherme berechnet. Die Bestimmung der Mesoporen und Makroporen bis 1500 Å erfolgt aus der Desorptionsisotherme mit Hilfe des von Barrett, Joyner und Halenda entwickelten Verfahrens, der sogenannten BJH-Methode. Die Bestimmung des Mikroporenvolumens und dessen Verteilung erfolgt aus der Adsorptionsisotherme mit Hilfe der Methode nach Horvath-Kawazoe. Die Bestimmung des Gesamtporenvolumens erfolgt aus dem durch das Sorbens adsorbierten Stickstoffvolumen bei dem relativen Druck p/p0 = 0,99 und Umrechnung auf das Volumen des flüssigen Stickstoffs.

Es ist ein besonderer Vorzug der erfindungsgemäßen Perlpolymerisat-Sorbentien, dass sie ein Gesamtporenvolumen von 1,0 ml/g bis 2,0 ml/g besitzen, das sich auf 15 Vol% bis 25 Vol% Mikroporen, 50 Vol% bis 80 Vol% Mesoporen und 5 Vol% bis 15 Vol% Makroporen verteilt.

Sorbentien, die nur aus Meso und Makroporen bestehen, adsorbieren langsam, haben eine geringe Kapazität und sind aufgrund dessen für den Einsatz in Hochdurchsatztechniken der Festphasenextraktion nicht geeignet. Sorbentien, die nur aus Mikroporen bestehen, adsorbieren ebenfalls langsam. Darüber hinaus können sie aus komplexen Matrices wie Plasma, Urin oder Biomasse die Analyten nicht abtrennen und sind aufgrund dessen für die meisten Anwendungen im Bereich der Festphasenextraktion nicht geeignet. Die erfindungsgemäßen Sorbentien mit ausgewogener Porengrößenverteilung zwischen Mikro-, Meso- und Makroporen zeigen dagegen eine exzellente Adsorptionsgeschwindigkeit und eine hohe Adsorptionskapazität für viele unterschiedliche Analyten sowohl aus wässrigen Lösungen als auch aus komplexen Matrices wie z.B. aus Blutplasma, Urin, Pflanzenextrakten oder Lebensmittelemulsionen.

Die erfindungsgemäßen Perlpolymerisate werden durch eine spezielle Ausführung der Suspensionspolymerisation hergestellt, wie sie in DE 100 06 590 beschrieben ist.

Die erfindungsgemäß eingesetzten Perlpolymerisate sind kugelförmig mit einem Durchmesser im Bereich von 5 µm bis 150 µm. Besonders geeignete Korngrößenbereiche für die erfindungsgemäße Verwendung der Perlpolymerisate sind 15 µm bis 45 µm und 56 µm bis 100 µm.

Die erfindungsgemäßen Perlpolymerisate haben eine spezifische Oberfläche von 200 m²/g bis 900 m²/g.

Durch Erniedrigung des pH-Werts können den erfindungsgemäßen Perlpolymerisaten auf die Anwendung angepasste Anionenaustauscher-Eigenschaften verliehen werden. Daraus ergibt sich der weitere Vorteil, dass sich saure Analyten von neutralen und basischen Analyten besonders leicht und selektiv abtrennen lassen.

Zusammensetzung, Korngröße und Menge des Perlpolymerisats werden an das Volumen, die aufzutrennenden Inhaltsstoffe und an den Arbeitsmaßstab der Probe angepasst. Im Bereich der analytischen Festphasenextraktion haben sich Säulenvolumina von 1 ml bis 30 ml als besonders vorteilhaft erwiesen. Hierzu wird das erfindungsgemäße Perlpolymerisat in 1-, 3-, 6-, 15- bzw. 30-ml-Säulen aus Polyethylen, Polypropylen, Polyetheretherketon oder Glas gepackt und mit geeigneten mikroporösen Filtern - vorzugsweise von 10 µm bis 45 µm Porengröße - von unten und oben verschlossen. Im Bereich der präparativen Festphasenextraktion sind Säulenvolumina bis 100 I möglich. Im Bereich der präparativen Festphasenextraktion ist der Einsatz der erfindungsgemäßen Perlpolymerisate auch in Rührreaktoren möglich.

Das erfindungsgemäße Festphasenextraktionsorbens eignet sich besonders gut für die automatisierte Anwendung. Hierzu wird das Perlpolymerisat vorzugsweise in 96-Well-Platten oder 384-Well-Platten gefüllt.

Eine Variante der Festphasenextraktion unter Verwendung des erfindungsgemäßen polymeren SPE-Materials besteht aus folgenden Schritten:
1. Konditionieren
2. Äquilibrieren
3. Beladen
4. Waschen
5. Eluieren
6. Identifizieren
7. Isolieren

Der Konditionierungsschritt erfolgt in der Regel mit wassermischbaren organischen Lösungsmitteln wie z.B. Methanol, Ethanol, Aceton, THF. Sie können in reiner Form bzw. im Gemisch mit Wasser eingesetzt werden. Beim Äquilibrieren wird das SPE-Material mit destilliertem Wasser oder einer Pufferlösung mit dem gewünschten pH-Wert gewaschen. Die Beladung wird durch Aufgeben eines bestimmten Volumens einer wässrigen Lösung organsicher Analyten und Filtrieren mit einer bestimmten Fließgeschwindigkeit durchgeführt. Bei der Aufgabe von 1 ml der Beladungslösung auf 60 mg Sorbens beträgt die Fließgeschwindigkeit 1 ml/min. Die Beladungslösung kann auf den gewünschten pH-Wert mit Hilfe eines gebräuchlichen Puffers eingestellt sein.

Die Beladungslösung kann auch ein Gemisch aus Wasser oder einem wässrigen Puffer und einem wassermischbaren organischen Lösungsmittel sein, wie z.B. Methanol, Ethanol, Acetonitril, N,N-Dimethylformamid oder Dimethylsulfoxid. In diesen Fällen sollte die Beladungslösung mehr als 50 Vol% Wasser enthalten.

Die Beladungslösung enthält mindestens einen gelösten organischen Stoff, der als Analyt bezeichnet wird. Die Beladungslösung kann auch mehrere gelöste organische Stoffe (Analyten) enthalten. Die organischen Stoffe können Medikamente, Pestizide, Herbizide, pflanzliche Wirkstoffe, Stoffwechselprodukte, Drogen, Gifte und viele weitere polare und unpolare organische Verbindungen sein. Die organischen Stoffe können auch Biomoleküle wie Eiweiße, Peptide, Hormone, Polynucleotide, Vitamine, Lipide, Kohlenhydrate und Enzyme sein. Die aufgezählten Analyten können sich in sogenannten komplexen Matrices befinden, wie z.B. Blutplasma, Urin, andere biologische Körperflüssigkeiten bzw. Gewebeextrakte, Obst-, Gemüse- und Fleischextrakte und Lebensmittelsubstanzen selbst. Die Beladungslösung kann auch Grundwasser, Oberflächenwasser, Trinkwasser oder ein wässriger oder organischer Extrakt einer Bodenprobe sein.

Die in dem Beladungsschritt auf dem polymeren SPE-Material adsorbierten Analyten werden im nachfolgenden Waschschritt von Verunreinigungen befreit. Je nach Substanzklasse und Aufgabenstellung werden hierzu unterschiedliche Waschlösungen verwendet, beispielsweise 5% Methanol in Wasser bei neutralen Analyten, 5% Methanol in Wasser mit pH = 3 bei sauren Analyten bzw. 5% Methanol in Wasser mit pH = 10 bei basischen Analyten. Beim Waschen der sauren und basischen Analyten kann die Waschlösung gegebenenfalls einen höheren Methanolanteil haben.

In dem Elutionsschritt werden die neutralen und basischen Analyten in der Regel mit Hilfe von Methanol oder Ethanol vollständig von dem polymeren SPE-Material desorbiert. Im Falle von sauren Analyten empfiehlt es sich, dem Methanol eine anorganische Base zuzusetzen, wie z.B. 2% NH₃-Lösung.

Die Identifizierung und Bestimmung der Wiederfindungsraten erfolgt in der Regel mit Hilfe von HPLC, HPLC-MS, GC, GC-MS oder im Falle von Einzelanalyten auch mit Hilfe der UV-VIS-Spektrometrie, Refraktometrie und anderen relevanten Methoden. Falls gewünscht, können die eluierten Stoffe durch schonendes Evakuieren isoliert werden. Bei flüchtigen Stoffen, wie z.B. manchen Aminen, sollte das Eluat am Rotationsverdampfer eingeengt werden oder vor dem Anlegen des Vakuums angesäuert werden.

In einer weiteren Ausführungsvariante der Festphasenextraktion unter Verwendung des erfindungsgemäßen polymeren SPE-Materials kann auf die Schritte des Konditionierens und Äquilibrierens vollständig verzichtet werden und das trockene polymere SPE-Material direkt mit der Beladungslösung benetzt werden. In diesem Fall sollte jedoch beachtet werden, dass die Kapazität des polymeren Sorbens niedriger ist.

Die Erfindung wird im folgenden anhand der nachstehenden Beispiele näher erläutert.

### Beispiel 1

### 1. Vorbereitung der SPE-Säulen

Ein perlförmiges N-Vinylimidazol-Divinylbenzen-Copolymer mit einem N-Vinylimidazolgehalt von 6 Ma% mit einer spezifischen Oberfläche von 647 m²/g, einem mittleren Porendurchmesser von 90 Å, einem Porenvolumen von 1,68 ml/g, folgender Porengrößenverteilung: 0,27 ml Mikroporen, 1,12 ml Mesoporen und 0,29 ml Makroporen und einer Korngrößenverteilung von 45 µm bis 71 µm wird jeweils in einer Menge von 60 ± 2 mg in 3-ml-Polypropylensäulchen gefüllt, die unten mit einer HDPE-Filterplatte (Porengröße 20 µm) verschlossen sind. Nach dem Verdichten des Pulvers wird das polymere Sorbens von oben mit der gleichen HDPE-Filterplatte verschlossen. Die so vorbereiteten Säulen sind für den Einsatz auf einer SPE-Vakuumstation bereit.

### 2. Vorbereitung der Testmischung

Jeder Analyt wurde mit einer Konzentration von 10 µg/ml in einem Gemisch von 50 Vol% Methanol und 50 Vol% 20 mM Phosphatpuffer pH = 7 gelöst. Es wurden folgende Lösungen hergestellt: Acetaminophen, Procainamid, Ranitidin, Koffein, Toluamid, Toluidin, 2,7-Dihydronaphthalen, Propranolol, Dipropylphthalat und Doxepin.

### 3. Erstellung von Kalibrierkurven

- HPLC-Anlage: Waters alliance
- Detektor: UV-VIS-Diodenarray-Detektor
- Säule: Waters Symmetry C18
- Mobile Phase: Methanol : Puffer pH 7 = 80 : 20 (v/v)
- Temperatur: 25 °C
- Fluss: 0,5 ml/min isokratisch

Durch Injektion von jeweils 2, 4, 6, 8 und 10 µl einer Analytlösung auf die HPLC-Säule und elektronische Auswertung der Elutionschromatogramme wurden für jeden Analyten eine lineare Kalibriergerade in dem zu erwartenden Konzentrationsbereich bei seiner charakteristischen Wellenlänge (längstwelliges Absorptionsmaximum) erstellt.

### 4. Durchführung der Festphasenextraktion

Die Festphasenextraktionen wurden nach zwei Protokollen durchgeführt.

### 4.1 SPE-Protokoll 1 (Trocken-Verfahren)

Dieses Protokoll simuliert die Arbeitsbedingungen in Hochdurchsatzautomaten. Das Sorbensbett wird mit Hilfe von Vakuum wiederholt trocken abgesaugt. Als Puffer wird 20 mmol Phosphatpuffer pH = 7 eingesetzt.
1. Konditionieren: 1 ml Methanol
2. Äquilibrieren: 1 ml Wasser
3. Trockenlaufen: 2 min unter vollem Vakuum
4. Beladen: 1 ml Testlösung (10 µg Analyt in 1 ml Puffer)
5. Waschen: 1 ml Puffer
6. Trockenlaufen: 2 min unter vollem Vakuum
7. Eluieren: 1 ml Methanol in 2 ml Messkolben sammeln
8. Vorbereiten für die HPLC: Eluat im 2-ml-Messkolben mit Puffer auffüllen.

### 4.2 SPE-Protokoll 2 (Naß-Verfahren)

Dieses Protokoll simuliert die Arbeitsbedingungen beim Einsatz von Silicagel-RP-Phasen als Festphasenextraktionsmaterial. Das Trockenlaufen des Sorbensbetts muss hier vollständig vermieden werden. Bei jedem Schritt werden die verwendeten Lösungen bzw. Lösungsmittel nur bis zur oberen Sorbensbettkante abgelassen, so dass die Oberfläche noch nass bleibt. Als Puffer wird 20 mmol Phosphatpuffer pH=7 eingesetzt.
1. Konditionieren: 1 ml Methanol
2. Äquilibrieren: 1 ml Wasser
3. Beladen: 1 ml Testlösung (10 µg Analyt in 1 ml Puffer)
4. Waschen: 1 ml Puffer
5. Eluieren: 1 ml Methanol, Eluat im 2-ml-Meßkolben sammeln
6. Probenvorbereitung für die HPLC: Eluat im 2-ml-Meßkolben mit Puffer auffüllen.

### 4.3 Bestimmung der Wiederfindungsraten

Mit Hilfe der HPLC und den entsprechenden Kalibriergeraden wurde die Menge des jeweils eluierten Analyten bestimmt und ins Verhältnis zu der Menge des Analyten in der Beladungslösung gesetzt. Dieses Verhältnis multipliziert mit 100 ergibt die prozentuellen Wiederfindungsraten für den untersuchten Analyten. Die Bestimmung der Wiederfindungsraten wurde für jeden Analyten dreifach wiederholt und aus den Ergebnissen ein Mittelwert gebildet. Die so erhaltenen Wiederfindungsraten an den erfindungsgemäßen NVI-DVB-Copolymeren und dem Referenzmaterial (NVP-DVB-Copolymer) sind in Tabelle 1 zusammengefasst.

**Tabelle 1: Wiederfindungsraten in Ma%**

| | Trocken-Verfahren | | Nass-Verfahren | |
|---|---|---|---|---|
| Analyt | NVI-DVB-CP | Referenz | NVI-DVB-CP | Referenz |
| Acetaminophen | 91,6 | 98,0 | 99,3 | 99,3 |
| Procainamid | 97,1 | 100,0 | 98,0 | 100,7 |
| Coffein | 91,0 | 89,0 | 97,9 | 93,5 |
| Ranitidin | 96,0 | 93,1 | 97,1 | 92,9 |
| Toluamid | 97,7 | 90,7 | 98,0 | 92,2 |
| Toluidin | 96,0 | 93,0 | 95,0 | 92,5 |
| 2,7-Dihydronaphthalin | 106,7 | 105,6 | 97,3 | 95,6 |
| Propranolol | 101,0 | 99,7 | 100,5 | 97,2 |
| Dipropylphthalat | 95,0 | 93,0 | 94,5 | 92,0 |
| Doxepin | 90,0 | 88,0 | 90,0 | 94,4 |

Aus dem Vergleich geht hervor, dass das erfindungsgemäße SPE-Material auf der Basis von NVI-DVB-Copolymeren sowohl unter drastischen als auch unter optimalen SPE-Bedingungen hohe Wiederfindungsraten für viele unterschiedliche polare Analyten liefert und vergleichbar bzw. teilweise besser als das Referenzmaterial auf der Basis von NVP-DVB-Copolymeren ist.

Da N-Vinylimidazol keine krebserregende Wirkung hat, ist die Herstellung von N-Vinylimidazol-Divinylbenzen-Copolymeren gegenüber den Menschen und der Umwelt freundlicher und weniger belastend. Damit stellen die erfindungsgemäßen NVI-DVB-Copolymeren eine umwelt-freundliche Alternative zu den NVP-DVB-Copolymeren dar.

### Beispiel 2

### Vergleich der Wiederfindungsraten mit einem weiteren SPE-Material

Das erfindungsgemäße Material aus Beispiel 1 wurde im Vergleich mit einem C18-RP-Silicagel-Material und einem hydrophoben Styren-Divinylbenzen-Copolymeren getestet.

Im Unterschied zu Beispiel 1 wurden jeweils 200 mg des Festphasenmaterials in 6-ml-Polypropylensäulchen zwischen mikroporösen HDPE-Filterplatten (Porengröße 20 µm) plaziert. Die Festphasenextraktion erfolgte nach dem Protokoll 1, d.h. mit dem zweifachen Trockenlaufen des Sorbensbetts. Aufgrund des größeren Volumens der verwendeten Sorbentien wurden die Prozessvolumina in jedem Protokollschritt auf 4 ml erhöht. Die Bestimmung der Wiederfindungsraten erfolgte analog zu Beispiel 1 und ist in Tabelle 2 dargestellt.

**Tabelle 2: Wiederfindungsraten (Trocken-Verfahren) in Ma%**

| Analyt | NVI-DVB-CP | C18-RP-Phase | Styren-DVB-CP |
|---|---|---|---|
| Acetaminophen | 90 | 71 | 13 |
| Koffein | 96 | 97 | 98 |
| Procainamid | 105 | 0 | 37 |
| Propranolol | 101 | 0 | 101 |
| Resorcinol | 85 | 15 | 22 |
| Phenol | 106 | 85 | 105 |
| p-Toluidin | 95 | 89 | 90 |

Aus dem Vergleich geht hervor, dass die erfindungsgemäßen NVI-DVB-Copolymeren trotz 2-maligem Trockenlaufen des Sorbensbetts ein breites Spektrum unterschiedlich polarer Analyten zuverlässig und mit einer hohen Wiederfindungsrate (größer 85%) finden lassen. Im Falle der Silicagel-RP-C18-Phase und der hydrophoben Styren-DVB-Copolymeren ist diese Sicherheit nicht gegeben.

Überraschend hat sich bei der Verwendung des erfindungsgemäßen Perlpolymerisat-Sorbens gezeigt, dass ein Trockenlaufen des Sorbensmaterials unabhängig davon, nach welchem technologischen Schritt der Festphasenextraktion es eingetreten ist, zu keinen Problemen führt und das Verfahren daher auch als zulässig angesehen werden kann.

## Patentansprüche

1. Festphasenextraktionssorbens, bestehend aus einem perlförmigen, hochporösen Polymeren, herstellbar durch Suspensionspolymerisation aus mindestens einem imidazolhaltigen Monomer als hydrophiles Monomer und einem Gemisch aus isomeren Divinylbenzen- und isomeren Ethylvinylbenzen-Monomeren als hydrophobes Monomer, wobei Divinylbenzen- und Ethylvinylbenzen-Monomere als Isomerengemisch mit 60 Ma% bis 95 Ma% und davon das Divinylbenzen-Isomerengemisch mit 50 Ma% bis 85 Ma% und das Ethylvinylbenzen-Monomere als Isomerengemisch 5 Ma% bis 40 Ma% einpolymerisiert sind, es ein Porenvolumen von 1 ml/g bis 2 ml/g bei einer spezifischen Oberfläche von 200 m²/g bis 900 m²/g aufweist, **dadurch gekennzeichnet, dass**
- das Sorbens einen Porendurchmesserbereich von 5 Å bis 1000 Å bei einem mittleren Porendurchmesser von 50 Å bis 100 Å aufweist,
- das Sorbens eine mittlere Korngröße im Bereich 5 µm bis 100 µm besitzt;
- Vinylimidazol als imidazolhaltiges Monomer mit 5 Ma% bis 12 Ma% einpolymerisiert ist,
- das Sorbens eine Verteilung des Porenvolumens auf 15% bis 25% Mikroporen, 50% bis 80% Mesoporen und 5% bis 15% Makroporen aufweist.

2. Sorbens nach Anspruch 1, **dadurch gekennzeichnet, dass** das imidazolhaltige Monomere durch radikalische Co- oder Terpolymerisation eines 1-Vinylimidazols, 4-Vinylimidazols, 1-Vinyl-2-Methylimidazols und 1-Vinyl-2-Ethylimidazols, mit einem Monomergemisch aus Divinylbenzen und Ethylvinylbenzen und gegebenenfalls mit einem weiteren funktionellen Baustein, vorzugsweise Acrylsäure oder Methacrylsäure und/oder ihrer Alkylester oder Alkylamide, in das polymere Netzwerk eingebaut ist.

3. Sorbens nach Anspruch 1 oder 2, **dadurch gekennzeichnet, dass** es ein N-Vinylimidazol-Divinylbenzen-Copolymer ist.

4. Verwendung eines Festphasenextraktionssorbens nach Anspruch 1 für eine Festphasenextraktion, die eine analytische oder präparative Extraktion zur Aufreinigung, Aufkonzentration und Isolierung synthetischer und natürlicher Wirkstoffe ist.

5. Verwendung eines Festphasenextraktionssorbens nach Anspruch 1 für eine Festphasenextraktion, wobei als Beladungslösung eine wässrige Lösung eines organischen Stoffs, eines natürlichen oder synthetischen Wirkstoffes, von Stoffwechselprodukten oder Körperflüssigkeiten wie Urin, Blut und Blutplasma oder eine beliebige Biomatrix eingesetzt ist.

6. Verwendung eines Festphasenextraktionssorbens nach Anspruch 1 für eine Festphasenextraktion, wobei bekannte solid phase extraction-Kartuschen oder 96- oder 384-Well-Platten in Hochdurchsatzautomaten eingesetzt sind.

## Claims

1. A sorbent for solid phase extraction comprising a pearl-shaped, highly porous polymer, said sorbent obtained by suspension polymerisation of at least one imidazole-containing monomer as a hydrophilic monomer and a mixture of isomeric divinylbenzene and isomeric ethylvinylbenzene monomers as hydrophobic monomers, said sorbent comprising 60 wt% to 95 wt% of the divinylbenzene ethylvinylbenzene monomer as an isomeric mixture, thereof 50 wt% to 85 wt% divinylbenzene isomeric mixture and 5 wt% to 40 wt% ethylvinylbenzene isomeric mixture, said sorbent having a pore volume from 1 ml/g to 2 ml/g and a specific surface area from 200 m²/g to 900 m²/g, **characterized in that**
- the sorbent exhibits a pore diameter range from 5 Å to 1000 Å with an average pore diameter from 50 Å to 100 Å,
- the sorbent has an average particle size in the range from 5 µm to 100 µm,
- the sorbent comprises 5 wt% to 10 wt% of vinylimidazole as the imidazole-containing monomer,
- the sorbent exhibits a pore volume distribution of 15% to 25% micro pores, 50% to 80% meso pores and 5% to 15% macro pores.

2. A sorbent of claim 1, **characterized in that** the imidazole-containing monomer is incorporated into the polymer network by radical co- or terpolymerization of 1-vinylimidazole, 4-vinylimidazole, 1-vinyl-2-methylimidazole and 1-vinyl-2-ethylimidazole with a monomer mixture comprising divinylbenzene and ethylvinylbenzene, and, where appropriate, a further functional compound, preferably acrylic acid or methacrylic acid and/or their alkyl esters or alkyl amides.

3. A sorbent of claims 1 or 2, **characterized in that** it is an N-vinylimidazole-divinylbenzene copolymer.

4. Application of a sorbent of claim 1 for a solid phase extraction which is an analytical or preparative extraction for clean-up, concentration, and isolation of synthetic and natural drugs.

5. Application of a sorbent of claim 1 for solid phase extraction where the loading solution is an aqueous solution of an organic compound, a natural or synthetic drug, metabolic products or body fluids such as urine, blood and blood plasma, or a an arbitrary biological matrix.

6. Application of a sorbent of claim 1 for solid phase extraction where common solid phase extraction cartridges or 96-well or 384-well plates are used in high-throughput devices.

## Revendications

1. Sorbant d'extraction sur phase solide, constitué d'un polymère sphérique, de porosité élevée et produit par polymérisation en suspension d'au moins un monomère hydrophile et d'au moins un monomère hydrophobe, dans lequel le monomère hydrophile est porteur de fonction imidazole et le monomère hydrophone est un mélange d'isomères du divinylbenzène et d'isomères de l'éthylvinylbenzène, lequel contient 60 à 95% en poids d'un mélange d'isomères à base de monomères du divinylbenzène et de l'éthylvinylbenzène dont 50 à 85% en poids d'un mélange d'isomères du divinylbenzène et 5 à 40% d'un mélange d'isomères de l'éthylvinylbenzène, présentant un volume de pore compris entre 1 ml/g et 2 ml/g pour une surface spécifique de 200 m²/g à 900 m²/g, **caractérisé en ce que**
- le sorbant présente des pores de diamètre compris entre 5 Å et 1000 Å pour un diamètre de pores moyen compris entre 50 Å et 100 Å,
- le sorbant possède une taille de particules moyenne comprise entre 5 µm et 100 µm;
- le vinylimidazole est utilisé comme monomère présentant une fonction imidazole à une teneur comprise entre 5 et 10% en poids,
- le sorbant présente une distribution du volume des pores telle qu'il y ait 15 à 25% de micropores, 50 à 80% de mésopores et 5 à 15% de macropores.

2. Sorbant selon la revendication 1, **caractérisé en ce que** le monomère à fonction imidazole est introduit dans le réseau polymère par co- ou terpolymérisation radicalaire d'un 1-vinylimidazole, d'un 4-vinylimidazole, d'un 1-vinyl-2-méthylimidazole et d'un 1-vinyl-2-éthylimidazole avec un mélange de monomères du divinylbenzène et de l'éthylvinylbenzène et le cas échéant de composés présentant des fonctions chimiques supplémentaires, de préférence l'acide acrylique ou l'acide méthacrylique et/ou les esters alkyliques ou amides alkyliques correspondants.

3. Sorbant selon la revendication 1 ou 2, **caractérisée en ce qu'**il s'agisse d'un copolymère du N-vinylimidazole et du divinylbenzène.

4. Utilisation d'un sorbant en phase solide selon la revendication 1 pour une extraction sur phase solide, qui est une extraction en quantité analytique ou préparative pour la purification, la concentration et l'isolation d'une substance active synthétique ou naturelle.

5. Utilisation d'un sorbant en phase solide selon la revendication 1 pour une extraction sur phase solide, pour laquelle la solution déposée est une solution aqueuse, une substance organique, une substance active naturelle ou synthétique, issue de produits métaboliques ou de liquides corporels tels que les urines, le sang et le plasma, ou une quelconque matrice biologique.

6. Utilisation d'un sorbant en phase solide selon la revendication 1 pour une extraction sur phase solide, pour laquelle sont utilisées des cartouches d'extraction sur phase solide usuelles ou des plaques de chargement pour automate au format 96 ou 384 puits.
